(19) 

Europäisches Patentamt
European Patent Office
Office européen des brevets

(11) **EP 4 538 232 A1**

(12) **EUROPEAN PATENT APPLICATION**
published in accordance with Art. 153(4) EPC

(43) Date of publication:
**16.04.2025 Bulletin 2025/16**

(51) International Patent Classification (IPC):
**C01G 21/00** *(2006.01)* **H10K 30/50** *(2023.01)*

(21) Application number: **23819838.6**

(52) Cooperative Patent Classification (CPC):
**C01G 21/00; H10K 30/50;** Y02E 10/549

(22) Date of filing: **06.06.2023**

(86) International application number:
**PCT/JP2023/020980**

(87) International publication number:
**WO 2023/238858 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 JP 2022092813**

(71) Applicants:
• **Idemitsu Kosan Co.,Ltd.**
**Tokyo 100-8321 (JP)**
• **The University of Tokyo**
**Bunkyo-ku, Tokyo 113-8654 (JP)**

(72) Inventors:
• **NAKAMURA, Motoshi**
**Tokyo 100-8321 (JP)**
• **MABUCHI, Takashi**
**Tokyo 100-8321 (JP)**
• **SEGAWA, Hiroshi**
**Tokyo 113-8654 (JP)**
• **BESSHO, Takeru**
**Tokyo 113-8654 (JP)**
• **NONOMURA, Kazuteru**
**Tokyo 113-8654 (JP)**

(74) Representative: **Hoffmann Eitle**
**Patent- und Rechtsanwälte PartmbB**
**Arabellastraße 30**
**81925 München (DE)**

(54) **PEROVSKITE COMPOUND AND PHOTOELECTRIC CONVERSION ELEMENT**

(57)      Provided is a perovskite-type compound having high heat resistance. The perovskite-type compound comprising a composition represented by $A(Pb_{1-x}Sn_x)I_{3-y}Br_y$. The element A is one kind or two or more kinds of elements selected from the group consisting of Li, Na, K, Rb and Cs. In the composition formula, x and y belong to any of ranges (1) to (6) below: (1) $0.0 \leq x < 0.0125$ and $1.6 \leq y \leq 3.0$; (2) $0.0125 \leq x < 0.1$ and $1.1 \leq y \leq 3.0$; (3) $0.1 \leq x < 0.3$ and $0.8 \leq y \leq 3.0$; (4) $0.3 \leq x < 0.5$ and $0.8 \leq y \leq 3.0$; (5) $0.5 \leq x < 0.7$ and $0.8 \leq y \leq 2.8$; and (6) $0.7 \leq x \leq 0.8$ and $0.8 \leq y \leq 1.8$.

FIG. 6

$Cs(Pb_{1-x}Sn_x)I_{3-y}Br_y$

× Poor
○ Good

**EP 4 538 232 A1**

**Description**

Technical Field

The present invention relates to a perovskite-type compound and a photoelectric conversion element.

Background Art

In recent years, as one of next-generation solar cells, a photoelectric conversion element (for example, a perovskite solar cell) containing a compound having a perovskite structure (perovskite-type compound) has attracted attention. As an example, the perovskite solar cell has a so-called n-i-p type laminated structure in which an electron transport layer made of an n-type semiconductor, a perovskite layer (light absorbing layer), and a hole transport layer made of a p-type semiconductor are arranged in this order from the light-receiving side. As another example, the perovskite solar cell has a so-called p-i-n type laminated structure in which a hole transport layer made of a p-type semiconductor, a perovskite layer, and an electron transport layer made of an n-type semiconductor are arranged in this order from the light-receiving side.

The perovskite layer contains a compound having a perovskite type crystal structure. The compound having the perovskite-type crystal structure is represented by the general formula $A\text{-}B\text{-}X_3$.

It is known that a wide variety of elements or molecules can be applied as the elements or molecules A, B, and X constituting the perovskite-type compound (Non Patent Literature 1, Non Patent Literature 2, and Non Patent Literature 3).

Citation List

Non Patent Literature

Non Patent Literature 1: Liang, J., et al., J. Am. Chem. Soc. 139, 14009-14012 (2017)
Non Patent Literature 2: Fang, Z., et al., Nano Energy 61, 389-396 (2019)
Non Patent Literature 3: Wang, Z., et al., Adv. Sci. 2019, 6, 1801704

Summary

However, it is known that many perovskite-type compounds applied to photoelectric conversion elements have problems in terms of heat resistance. In particular, in the case of being used for a space such as a satellite under an environment that can be exposed to high temperatures, a perovskite-type compound that can withstand higher temperatures than those used on the ground is required.

From such a viewpoint, a perovskite-type compound and a photoelectric conversion element having high heat resistance are desired.

In one aspect, a perovskite-type compound comprises a composition represented by $A(Pb_{1-x}Sn_x)I_{3-y}Br_y$. The element A is one kind or two or more kinds of elements selected from the group consisting of Li, Na, K, Rb and Cs. x and y in the composition formula belong to any of ranges (1) to (6) below:

$$(1) \quad 0.0 \leq x < 0.0125 \text{ and } 1.6 \leq y \leq 3.0$$

$$(2) \quad 0.0125 \leq x < 0.1 \text{ and } 1.1 \leq y \leq 3.0$$

$$(3) \quad 0.1 \leq x < 0.3 \text{ and } 0.8 \leq y \leq 3.0$$

$$(4) \quad 0.3 \leq x < 0.5 \text{ and } 0.8 \leq y \leq 3.0$$

$$(5) \quad 0.5 \leq x < 0.7 \text{ and } 0.8 \leq y \leq 2.8$$

$$(6) \quad 0.7 \leq x \leq 0.8 \text{ and } 0.8 \leq y \leq 1.8.$$

In one aspect, a photoelectric conversion element comprises a light absorbing layer including the above-mentioned perovskite-type compound.

Brief Description of Drawings

Fig. 1 is a thickness direction cross-sectional view illustrating an example of a photoelectric conversion element according to an embodiment.
Fig. 2 is a thickness direction cross-sectional view illustrating another example of the photoelectric conversion element according to the embodiment.
Fig. 3 is a diagram showing a band gap of a perovskite-type compound comprising a composition represented by $Cs(Pb_{1-x}Sn_x)I_{3-y}Br_y$.
Fig. 4 is a Tauc plot of absorption coefficients in some perovskite-type compounds.
Fig. 5 is a graph showing results of X-ray diffraction experiments for some perovskite-type compounds.
Fig. 6 is a plot showing experimental results of heat resistance in some perovskite-type compounds.

Description of Embodiments

Hereinafter, embodiments will be described with reference to the drawings. In the following drawings, the same or similar parts are denoted by the same or similar reference numerals. However, it should be noted that the drawings are schematic, and ratios of dimensions and the like may be different from actual ones.

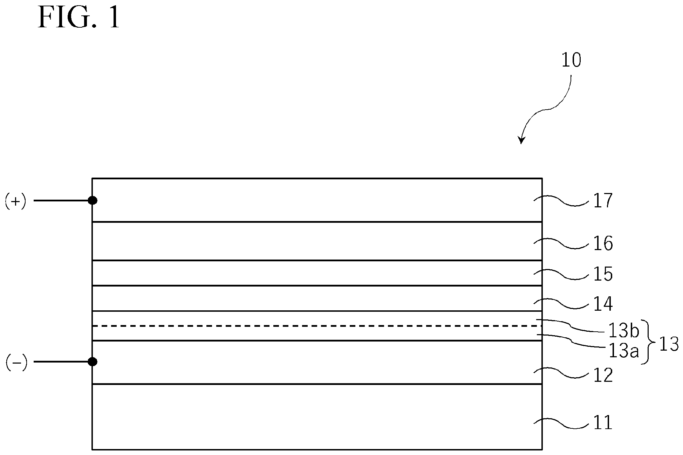

Fig. 1 is a thickness direction cross-sectional view illustrating an example of a photoelectric conversion element according to an embodiment. The photoelectric conversion element shown in Fig. 1 may be a perovskite-type solar cell including a light absorbing layer that comprises a compound having a perovskite structure. The photoelectric conversion element illustrated in Fig. 1 is a so-called single-junction photoelectric conversion element.

The photoelectric conversion element 10 may include a substrate 11, a first conductive layer 12, an electron transport layer 13, a light absorbing layer 14, a hole transport layer 15, a second conductive layer 16, and a third conductive layer 17. The first conductive layer 12 is provided on the substrate 11. The electron transport layer 13 is provided on the first conductive layer 12. The light absorbing layer 14 is provided on the electron transport layer 13. The hole transport layer 15 is provided on the light absorbing layer 14. The second conductive layer 16 is provided on the hole transport layer 15. The third conductive layer 17 is provided on the second conductive layer 16.

The substrate 11 is a base for laminating the first conductive layer 12, the electron transport layer 13, the light absorbing layer 14, the hole transport layer 15, the second conductive layer 16 and the third conductive layer 17. The substrate 11 can be selected from a transparent glass substrate such as soda-lime glass or alkali-free glass, a resin substrate, a metal substrate, a ceramic substrate, and the like. The substrate 11 may be either a substrate having no translucency or a substrate having translucency. The substrate 11 may be a flexible substrate.

In the present specification, "translucency" means that 10% or more of light having any wavelength of 200 nm to 2000 nm is transmitted.

When the substrate 11 has translucency, light may enter toward the photoelectric conversion element 10 from the substrate 11 side (lower side in the drawing) or from the third conductive layer 17 side (upper side in the drawing). On the other hand, when the substrate 11 does not have translucency, light enters the photoelectric conversion element 10 from the third conductive layer 17 side (upper side in the drawing).

Details of the first conductive layer 12, the electron transport layer 13, the light absorbing layer 14, the hole transport layer 15, the second conductive layer 16, and the third conductive layer 17 are described later.

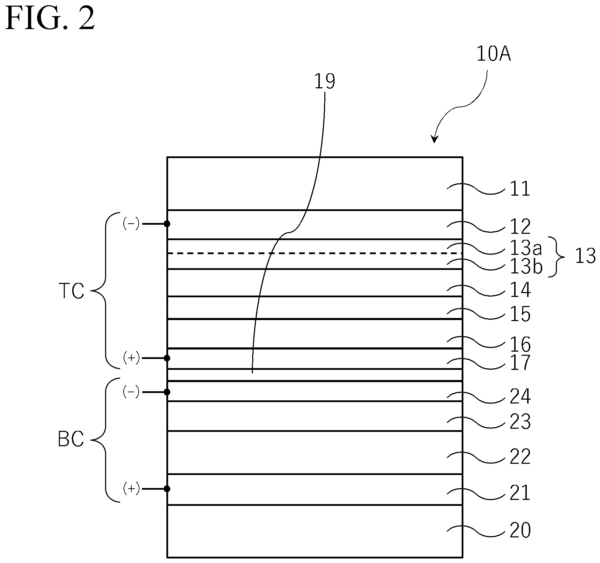

Fig. 2 is a thickness direction cross-sectional view illustrating another example of the photoelectric conversion element according to the embodiment. The photoelectric conversion element shown in Fig. 2 may be a perovskite-type solar cell including a light absorbing layer that comprises a compound having a perovskite structure. The photoelectric conversion element illustrated in Fig. 2 is a so-called multi-junction photoelectric conversion element. A multi-junction photoelectric conversion element includes a plurality of photoelectric conversion cells laminated on each other. That is, the multi-junction photoelectric conversion element may include a plurality of light absorbing layers.

In Fig. 2, the photoelectric conversion element 10A has a laminated structure in which a top cell TC and a bottom cell BC are laminated on each other. In the configuration of Fig. 2, light enters the photoelectric conversion element 10A from the top cell TC side (upper side in the drawing). Among the incident light, light on a short wavelength side is photoelectrically converted by the top cell TC. Further, among the incident light, light on the long wavelength side that has passed through the top cell TC is photoelectrically converted by the bottom cell BC.

The top cell TC may have the same configuration as the perovskite-type photoelectric conversion element shown in Fig. 1. Therefore, the top cell TC may include the substrate 11, the first conductive layer 12, the electron transport layer 13, the light absorbing layer 14, the hole transport layer 15, the second conductive layer 16, and the third conductive layer 17. The first conductive layer 12 is provided on the substrate 11. The electron transport layer 13 is provided on the first conductive layer 12. The light absorbing layer 14 is provided on the electron transport layer 13. The hole transport layer 15 is provided on the light absorbing layer 14. The second conductive layer 16 is provided on the hole transport layer 15. The third conductive layer 17 is provided on the second conductive layer 16. Here, the substrate 11 is a substrate having translucency.

The bottom cell BC may include a substrate 20, a first electrode layer 21, a photoelectric conversion layer (light absorbing layer) 22, a buffer layer 23, and a second electrode layer 24. The first electrode layer 21 may be provided on the substrate 20. The photoelectric conversion layer 22 may be provided on the first electrode layer 21. The buffer layer 23 may be provided on the photoelectric conversion layer 22. The second electrode layer 24 may be provided on the buffer layer 23.

As the bottom cell BC, for example, a configuration of a known photoelectric conversion element (for example, a solar cell) such as a compound photoelectric conversion element such as a CZTS photoelectric conversion element, a CIGS photoelectric conversion element, a CdTe photoelectric conversion element, or a GaAs photoelectric conversion element, or a silicon photoelectric conversion element or an organic photoelectric conversion element can be applied. Therefore, any explanation regarding the configuration of the bottom cell BC is omitted. The buffer layer 23 of the bottom cell BC may be omitted.

The photoelectric conversion element 10A illustrated in Fig. 2 has a so-called four-terminal tandem structure including four terminals including two positive electrodes and two negative electrodes. In this case, the photoelectric conversion element 10A may have an intermediate layer 19 between the top cell TC and the bottom cell BC. The intermediate layer 19 may be a transparent insulating layer.

Instead of the four-terminal tandem structure illustrated in Fig. 2, the photoelectric conversion element may have a two-terminal tandem structure. In this case, the photoelectric conversion element may not include at least the second conductive layer 16, the third conductive layer 17, and the second electrode layer 24 illustrated in Fig. 2.

Next, the first conductive layer 12, the electron transport layer 13, the light absorbing layer 14, the hole transport layer 15, the second conductive layer 16, and the third conductive layer 17 described above are described in detail.

The first conductive layer 12 may be a layer that acts as an anode of the photoelectric conversion element. Examples of the material of the first conductive layer 12 include: conductive transparent materials such as copper iodide (CuI), indium tin oxide (ITO), tin oxide ($SnO_2$), fluorine doped tin oxide (FTO), aluminum doped zinc oxide (AZO), indium zinc oxide (IZO), and gallium doped zinc oxide (GZO); metal sodium; a sodium-potassium alloy; metal lithium; metal magnesium; metal aluminum; a magnesium-silver mixture; a magnesium-indium mixture; an aluminum-lithium alloy; an aluminum-aluminum oxide ($Al/Al_2O_3$) mixture; and an aluminum-lithium fluoride (Al/LiF) mixture. The above materials may be used singly or as a mixture of two or more kinds thereof.

The first conductive layer 12 preferably has translucency. However, when light enters the photoelectric conversion element from the third conductive layer 17 side, the first conductive layer 12 may not have translucency.

The first conductive layer 12 can be formed by, for example, a film forming method such as a vapor deposition method or a sputtering method. Although not particularly limited, the thickness of the first conductive layer 12 is preferably 0.1 $\mu$m or more. Accordingly, sufficient conductivity can be maintained in the first conductive layer 12. Although not particularly limited, the thickness of the first conductive layer 12 is preferably 5.0 $\mu$m or less. This makes it easy to maintain the light transmittance of the first conductive layer 12 relatively high.

The electron transport layer 13 has a function of transporting electrons generated by photoexcitation of the light absorbing layer 14 to the first conductive layer 12. Therefore, the electron transport layer 13 is preferably formed of a material having characteristics in which electrons generated in the light absorbing layer 14 can easily move to the electron transport layer 13 and in which electrons of the electron transport layer 13 can easily move to the first conductive layer 12.

Examples of the material of the electron transport layer 13 include inorganic materials such as titanium oxide ($TiO_2$), tungsten oxide ($WO_2$, $WO_3$, $W_2O_3$, etc.), zinc oxide (ZnO), niobium oxide ($Nb_2O_5$ and the like), tantalum oxide ($Ta_2O_5$ and the like), yttrium oxide ($Y_2O_3$ and the like), strontium titanate ($SrTiO_3$ and the like) and tin oxide ($SnO_2$), and organic materials such as fullerene (C60, C70, etc.) and derivatives thereof ($PC_{60}BM$, $PC_{70}BM$, ICBA, Hydrogenated C60, Hydroxylated C60, etc.). The above materials may be used alone, or may be a mixture of two or more kinds.

The electron transport layer 13 may have a single layer structure or a laminated structure including a plurality of layers. In Figs. 1 and 2, the electron transport layer 13 includes a dense layer 13a having a dense structure and a porous layer 13b having a porous structure. The dense layer 13a is positioned between the first conductive layer 12 and the porous layer 13b, and the porous layer 13b is positioned between the dense layer 13a and the light absorbing layer 14.

The dense layer 13a has a denser structure than the porous layer 13b. In other words, the number of voids in the dense layer 13a is smaller than the number of voids in the porous layer 13b. The dense layer 13a is a layer in which a solution or the like used for forming the light absorbing layer 14 hardly infiltrates. The dense layer 13a has a function of preventing contact between the first conductive layer 12 and the second conductive layer 16 and has a function of preventing contact between the first conductive layer 12 and the hole transport layer 15, the contacts causing a decrease in photovoltaic power. Therefore, reduction in photovoltaic power can be suppressed by the dense layer 13a.

The thickness of the dense layer 13a is, for example, preferably in the range of 5 nm to 200 nm, and more preferably in the range of 10 nm to 100 nm.

As an example, when the electron transport layer 13 is titanium oxide, the dense layer 13a can be formed by the following method. First, a coating liquid containing a titanium chelate compound is prepared, and the coating liquid is coated onto the first conductive layer 12 by a film forming method such as a spin coating method, a screen printing method, a spray pyrolysis method, or an aerosol deposition method. Thereafter, the dense layer 13a containing titanium oxide is formed by firing. After the firing, the dense layer 13a containing titanium oxide may be immersed in an aqueous solution of titanium tetrachloride. Thus, the denseness of the dense layer 13a can be increased. The titanium chelate compound used for forming the dense layer 13a containing titanium oxide is preferably a compound having an acetoacetic acid ester chelate group, a compound having a $\beta$-diketone chelate group, or the like.

On the other hand, the porous layer 13b has larger voids than the dense layer 13a, and is a layer into which a solution or the like used for forming the light absorbing layer 14 infiltrates. The material of the light absorbing layer 14 can be filled in and held in the pores of the porous layer 13b. Therefore, the porous layer 13b has a function of expanding a contact area between the electron transport layer 13 and the light absorbing layer 14 and has a function of efficiently transferring electrons generated by photoexcitation in the light absorbing layer 14 to the electron transport layer 13. As a result, electrons generated by photoexcitation in the light absorbing layer 14 can be efficiently charge separated by the porous layer 13b, and recombination of electrons and holes can be suppressed. As a result, the photoelectric conversion efficiency of the solar cell can be improved.

The thickness of the porous layer 13b is, for example, preferably in a range of 10 nm to 2000 nm, and more preferably in a range of 20 nm to 500 nm.

As an example, when the electron transport layer 13 is formed of titanium oxide, the porous layer 13b can be formed by the following method. First, for example, a coating liquid containing titanium oxide particles is prepared, and the coating liquid is coated onto the dense layer 13a by a film forming method such as a spin coating method, a screen printing method, a spray pyrolysis method, or an aerosol deposition method. Thereafter, the porous layer 13b containing titanium oxide is formed by firing. Although not particularly limited, when the porous layer 13b is formed of titanium oxide, anatase type titanium oxide particles are preferably used.

The hole transport layer 15 is positioned between the light absorbing layer 14 and the second conductive layer 16. The hole transport layer 15 has a function of capturing holes generated in the light absorbing layer 14 and has a function of moving the holes to the second conductive layer 16 as a cathode. The hole transport layer 15 may contain a matrix component composed of, for example, 2,2',7,7'-tetrakis-(N,N-di-p-methoxyphenylamine)9,9'-spirobifluorene (Spiro-OMeTAD) or poly[bis(4-phenyl) (2,4,6-trimethylphenyl)amine] (PTAA), or may contain an organic low molecular weight thin film that preferentially captures holes such as [2-(9Hcarbazol-9-yl)ethyl] phosphonic acid (2PACz). Optionally, in order to suppress recombination of holes and electrons, a passivate layer (not illustrated) made of a metal oxide or an organic thin film may be provided between the light absorbing layer 14 and the hole transport layer 15.

The hole transport layer 15 may contain an additive that increases the carrier density. As an example, lithium(fluorosulfonyl) (trifluoromethyl)imide (LiTFSI) can be applied as the additive.

The thickness of the hole transport layer 15 is preferably in a range of 1 nm to 500 nm, and more preferably in a range of 1 nm or more and 130 nm or less.

The hole transport layer 15 may be an amorphous layer. In addition, the hole transport layer 15 may contain an organic binder resin or a plasticizer, and the like.

The hole transport layer 15 can be formed by, for example, the following manufacturing method. First, a compound of said matrix component is dissolved in an organic solvent to prepare a coating liquid, and the coating liquid is coated onto the light absorbing layer 14 (or the passivate layer). Thereafter, the organic solvent is removed to form the hole transport layer 15. The organic solvent used for forming the hole transport layer 15 is preferably a solvent that does not disturb the crystal structure of the organic-inorganic hybrid compound because the organic solvent is coated onto the light absorbing layer 14. Examples of the solvent include chlorobenzene, toluene and isopropanol, and so on. The coating method of the coating liquid is not particularly limited, and examples thereof include a spin coating method, a screen printing method, and a dip coating method.

The second conductive layer 16 is a transparent conductive layer having translucency, and acts as an cathode of the photoelectric conversion element. The second conductive layer 16 is formed on the hole transport layer 15 and is in contact with the hole transport layer 15.

As the material of the second conductive layer 16, any conductive transparent material can be used. The material of the second conductive layer 16 is preferably a metal oxide containing, for example, any of indium, zinc and tin. Examples of the material of the second conductive layer 16 include conductive transparent materials and conductive transparent polymers such as copper iodide (CuI), indium tin oxide (ITO), tin oxide ($SnO_2$), fluorine-doped tin oxide (FTO), aluminum-doped zinc oxide (AZO), indium zinc oxide (IZO), and gallium-doped zinc oxide (GZO).

Optionally, a buffer layer (not illustrated) may be formed between the second conductive layer 16 and the hole transport layer 15. The buffer layer may be formed of, for example, molybdenum oxide or the like.

The third conductive layer 17 is an auxiliary electrode layer laminated on the second conductive layer 16. The third conductive layer 17 has a function of reducing electric resistance of a whole cathode. The third conductive layer 17 may be a transparent electrode or a collecting electrode such as a metal grid. When the third conductive layer 17 is a transparent electrode, the material thereof may be the same as the material of the second conductive layer 16 or different from the material of the second conductive layer 16.

Examples of the material of the third conductive layer 17 include: metal materials such as gold, silver, copper, aluminum and nickel; conductive transparent materials; and conductive transparent polymers such as copper iodide (CuI), indium tin oxide (ITO), tin oxide ($SnO_2$), fluorine-doped tin oxide (FTO), aluminum-doped zinc oxide (AZO), indium zinc oxide (IZO), and gallium-doped zinc oxide (GZO). The above materials may be used singly or as a mixture of two or more kinds thereof.

The third conductive layer 17 can be produced, for example, by forming a film of an anode material on the second conductive layer 16 by a method such as vapor deposition or printing. In addition, the third conductive layer 17 may be formed in a mesh shape or a grid shape using a vapor deposition mask or the like.

The light absorbing layer 14 contains a compound having a perovskite structure (perovskite-type compound), and has a function of generating electrons and holes by absorption of incident light. In the light absorbing layer 14, low-energy electrons in a substance constituting the light absorbing layer are photoexcited by incident light, and higher-energy electrons and holes are generated. Electrons generated by photoexcitation move to the electron transport layer 13, and holes generated by photoexcitation move to the hole transport layer 15.

The perovskite-type compound is represented by the composition formula A-B-$X_3$. The element A is disposed at each vertex of the unit cell. The element B is disposed near each body center of the unit cell. The element X is disposed near each face center of the unit cell.

The element A in the composition formula is one kind or two or more kinds of elements selected from the group consisting of lithium (Li), sodium (Na), potassium (K), rubidium (Rb) and cesium (Cs). Preferably, the element A is cesium.

In the present embodiment, the element B in the composition formula contains lead (Pb) or tin (Sn), or both of lead and tin. The element X in the composition formula is iodine (I) or both iodine (I) and bromine (Br). Therefore, in the present embodiment, the perovskite-type compound has the following composition formula: $A(Pb_{1-x}Sn_x)I_{3-y}Br_y$.

x in the composition formula is a real number of 0 or more and 1 or less. y in the composition formula is a real number of 0 or more and 3 or less. A more specific range of x and y is described later. Since the perovskite-type compound having the present composition formula does not contain organic molecules, the perovskite-type compound tends to have high heat resistance.

The perovskite-type compound can be formed by coating a perovskite precursor solution and firing the solution. Here, the perovskite precursor solution may be a mixture obtained by mixing the A-Pb-$I_3$ solution, the A-Pb-$Br_3$ solution, the A-Sn-$I_3$ solution and the A-Sn-$Br_3$ solution in desired amounts. By changing the mixing ratio of these solutions, the values of x and y in the composition formula of the perovskite-type compound described above can be appropriately set. The method for coating the perovskite precursor solution is not particularly limited, but a spin coating method, a screen printing method, a dip coating method, or the like can be coated.

In the present embodiment, from the viewpoint of the heat resistance of the perovskite-type compound, x and y in the composition formula belong to any one of the following ranges (1) to (6).

$$(1)\ \ 0.0 \leq x < 0.0125 \ \text{and} \ 1.6 \leq y \leq 3.0$$

$$(2)\ \ 0.0125 \leq x < 0.1 \ \text{and} \ 1.1 \leq y \leq 3.0$$

$$(3)\ \ 0.1 \leq x < 0.3 \ \text{and} \ 0.8 \leq y \leq 3.0$$

$$(4)\ \ 0.3 \leq x < 0.5 \ \text{and} \ 0.8 \leq y \leq 3.0$$

$$(5)\ \ 0.5 \leq x < 0.7 \ \text{and} \ 0.8 \leq y \leq 2.8$$

$$(6)\ \ 0.7 \leq x \leq 0.8 \ \text{and} \ 0.8 \leq y \leq 1.8$$

From the viewpoint of the heat resistance of the perovskite-type compound, more preferable ranges of x and y in the composition formula are as follows. In a range where "$0.0 \leq x < 0.0125$" is satisfied, "$1.8 \leq y \leq 3.0$" is preferably satisfied, and "$2.0 \leq y \leq 3.0$" is more preferably satisfied.

In a range where "$0.125 \leq x < 0.1$" is satisfied, "$1.2 \leq y \leq 3.0$" is preferably satisfied, "$1.3 \leq y \leq 3.0$" is more preferably satisfied, "$1.4 \leq y \leq 3.0$" is still preferably satisfied, and "$1.5 \leq y \leq 3.0$" is still more preferably satisfied.

In a range where "$0.1 \leq x < 0.3$" is satisfied, "$0.9 \leq y \leq 3.0$" is preferably satisfied, and "$1.0 \leq y \leq 3.0$" is more preferably satisfied.

In a range where "$0.3 \leq x < 0.5$" is satisfied, y is preferably 0.8 or more, more preferably 0.9 or more, and still preferably 1.0 or more. In a range where "$0.3 \leq x < 0.5$" is satisfied, y is preferably 2.8 or less, more preferably 2.7 or less, still preferably 2.6 or less, and still more preferably 2.5 or less.

In a range where "$0.5 \leq x < 0.7$" is satisfied, y is preferably 0.8 or more, more preferably 0.9 or more, and still preferably 1.0 or more. In a range where "$0.5 \leq x < 0.7$" is satisfied, y is preferably 2.6 or less, more preferably 2.4 or less, still preferably 2.2 or less, and still more preferably 1.8 or less. Furthermore, in a range where "$0.5 \leq x < 0.7$" is satisfied, y may be 1.5 or less.

In a range where "$0.7 \leq x \leq 0.8$" is satisfied, y is preferably 0.8 or more, more preferably 0.9 or more, and still preferably 1.0 or more. In a range where "$0.7 \leq x \leq 0.8$" is satisfied, y is preferably 1.7 or less, more preferably 1.6 or less, and still preferably 1.5 or less.

In a preferred embodiment, from the viewpoint of the heat resistance of the perovskite-type compound, x and y in the composition formula belong to any of the following ranges (1) to (5).

$$(1) \quad 0.0 \leq x < 0.0125 \text{ and } 2.0 \leq y \leq 3.0$$

$$(2) \quad 0.0125 \leq x < 0.1 \text{ and } 1.5 \leq y \leq 3.0$$

$$(3) \quad 0.1 \leq x < 0.3 \text{ and } 1.0 \leq y \leq 3.0$$

$$(4) \quad 0.3 \leq x < 0.5 \text{ and } 1.0 \leq y \leq 2.5$$

$$(5) \quad 0.5 \leq x \leq 0.7 \text{ and } 1.0 \leq y \leq 1.5$$

It is considered that the perovskite-type compound has high heat resistance in the above ranges of x and y. Specifically, the X-ray diffraction experiment was performed before heating the perovskite-type compound and after heating the perovskite-type compound at 150°C. In the X-ray diffraction pattern of the perovskite-type compound in the above range of x and y, the peak of a diffraction angle ($2\theta$) of 13 to 16° that indicates the perovskite-type compound hardly changes before and after heating. This suggests that the perovskite-type compound can withstand a high temperature of 150°C.

Preferably, the position of the X-ray diffraction peak at which the diffraction angle $2\theta$ of the perovskite-type compound after being heated for 500 hours under a nitrogen atmosphere at 150°C is found to be 13 to 16° is positioned within a range of 0.05° from the position of the X-ray diffraction peak of the perovskite-type compound before being heated. In this case, the crystal structure of the perovskite-type compound is maintained for a long time under a high temperature condition of 150°C.

From the viewpoint of the efficiency of pair generation of electrons and holes by sunlight, the band gap (Eg) between the valence band and the conduction band in the perovskite-type compound is desirably smaller than a desired value. From this viewpoint, the band gap is preferably 1.9 eV or less, and more preferably 1.8 eV or less.

Similarly, from the viewpoint of efficiency in photoelectric conversion, the band gap between the valence band and the conduction band in the perovskite-type compound is preferably 1.5 eV or more, more preferably 1.6 eV or more, and still more preferably 1.7 eV or more. The perovskite-type compound having these band gaps is suitably used as a light absorbing layer of a photoelectric conversion element.

In particular, in the case of the multi-junction photoelectric conversion element described above, the band gap of the light absorbing layer of the top cell is preferably 1.6 eV to 1.9 eV, and more preferably 1.7 eV to 1.8 eV. In this case, it is known that the photoelectric conversion efficiency of the entire multi-junction photoelectric conversion element is extremely high (see Non Patent Literature 3). Therefore, the band gap of the perovskite-type compound according to the present embodiment is preferably 1.6 eV to 1.9 eV, more preferably 1.7 eV to 1.8 eV.

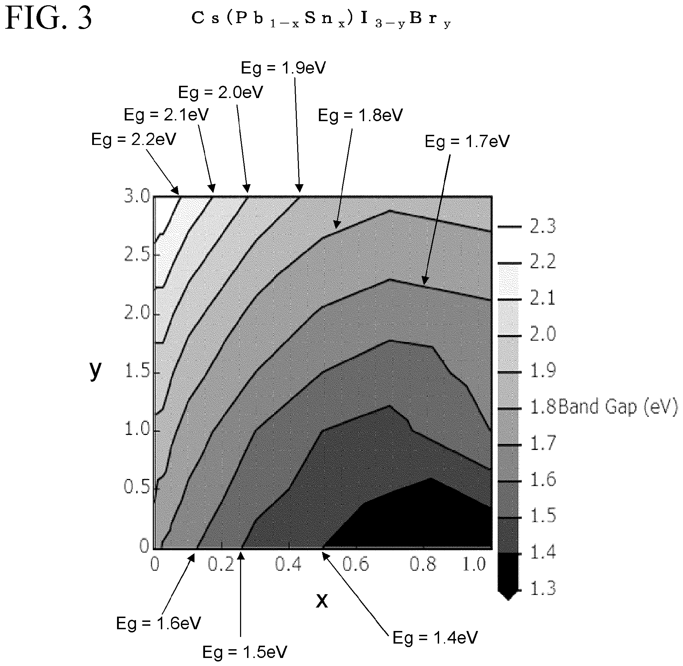

Fig. 3 is a diagram showing a band gap (energy gap) of a perovskite-type compound having a composition formula represented by $Cs(Pb_{1-x}Sn_x)I_{3-y}Br_y$. In Fig. 3, the horizontal axis represents the value of x in the composition formula, and the vertical axis represents the value of y in the composition formula.

Each line drawn in the diagram means a location where the energy gap (Eg) of the perovskite-type compound corresponds to 1.4 eV, 1.5 eV, 1.6 eV, 1.7 eV, 1.8 eV, 1.9 eV, 2.0 eV, 2.1 eV or 2.2 eV, respectively. The region between adjacent lines corresponds to a region having an energy gap of value between the values of the two energy gaps indicated by the respective lines. Therefore, the region between the line labeled as "Eg = 1.7 eV" and the line labeled as "Eg = 1.8 eV" means that the energy gap is in the range of 1.7 eV to 1.8 eV.

The energy gap illustrated in Fig. 3 can be calculated by using an absorption coefficient $\alpha$ measured by ultraviolet-visible spectroscopy. The absorption coefficient $\alpha$ can be measured and calculated by ultraviolet-visible spectroscopy, for example, by a method in accordance with JISK0115:2020. The absorption coefficient $\alpha$ actually measured by ultraviolet-visible spectroscopy may vary depending on the frequency $\nu$ of light.

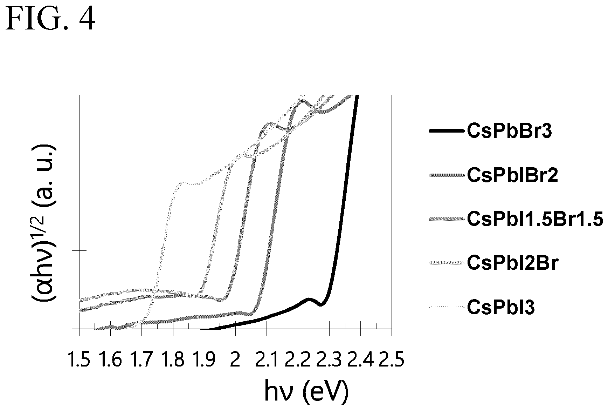

To calculate the energy gap, Tauc plot is generated from the measured extinction absorption coefficient $\alpha$. The Tauc plot shows the absorption coefficient $\alpha$ with the vertical axis as $(h\nu\alpha)^{1/n}$ and the horizontal axis as hv (see also Fig. 4). In Fig. 4, Tauc plot of the extinction absorption coefficient $\alpha$ measured by ultraviolet-visible spectroscopy is shown for some perovskite-type compounds.

The band gap Eg of the semiconductor is calculated from the measured absorption coefficient $\alpha$ on the basis of the following relational expression "$(h\nu\alpha)^{1/n}=k(h\nu\text{-}Eg)$". "h" is the Planck constant. "v" is the frequency of the emitted light. Since the transition in $Cs(Pb_{1-x}Sn_x)I_{3-y}Br_y$ is considered to be a directly permissive transition, "n = 1/2". "k" is a proportional constant.

In Fig. 4, the value of "$(h\nu\alpha)^{1/2}$" increases little by little or is maintained almost unchanged as the energy hv of the incident light increases, and draws an ascending curve that sharply increases in the vicinity of the band gap. The value of the energy hv at the intersection of the tangent passing through the inflection point of the steep rising curve and the baseline of the Tauc plot is the band gap Eg. Here, the baseline can be determined by a known method. For example, the baseline may be defined by an approximate straight line obtained by a least squares method from a plurality of measurement points on a sufficiently lower energy side than a sharp rising curve in the vicinity of the band gap.

In this way, the band gap of the perovskite-type compound can be determined. In the present specification, the band gap may be calculated by the above method.

Referring to Fig. 3, in $Cs(Pb_{1-x}Sn_x)I_{3-y}Br_y$, a region having an energy gap of 1.9 eV or less roughly corresponds to a region satisfying "$y \leq 5.0x + 1.0$". Therefore, from the viewpoint of photoelectric conversion efficiency in addition to the heat resistance conditions described above, $Cs(Pb_{1-x}Sn_x)I_{3-y}Br_y$ more preferably satisfies "$y \leq 5.0x + 1.0$".

Further, referring to Fig. 3, it is found that the energy gap is 1.6 eV or more when "$2.5x + 0.25 \leq y$". Therefore, from the viewpoint of photoelectric conversion efficiency in addition to the heat resistance conditions described above, $Cs(Pb_{1-x}Sn_x)I_{3-y}Br_y$ more preferably satisfies "$2.5x + 0.25 \leq y$".

[Experimental Example]

Next, experimental results on the heat resistance of the perovskite-type compound of the above embodiment are described. In the experimental example, the perovskite-type compound was produced by the following procedure.

First, a $CsPbI_3$ solution at a concentration of 0.4M (molar), a $CsPbBr_3$ solution at the same concentration, a $CsSnI_3$ solution at the same concentration, and a $CsSnBr_3$ solution at the same concentration were prepared. The solvent is dimethyl sulfoxide (DMSO).

Next, some or all of the $CsPbI_3$ solution, the $CsPbBr_3$ solution, the $CsSnI_3$ solution and the $CsSnBr_3$ solution were mixed in a desired ratio as necessary according to the composition ratio of the elements constituting the perovskite-type compound to be produced. Thereby, $Cs(Pb_{1-x}Sn_x)I_{3-y}Br_y$ solution having desired values of x and y was prepared.

Next, $Cs(Pb_{1-x}Sn_x)I_{3-y}Br_y$ solution was coated onto the glass substrate cleaned in advance by a spin coating method in a nitrogen atmosphere. The spin coating was performed under the conditions of 0 rpm for the first 10 seconds, 500 rpm for the next 10 seconds, and 2000 rpm for the next 80 seconds. When 80 seconds had elapsed from the start of spin coating, 0.15 ml of toluene was used as a poor solvent.

Next, the solution coated onto the glass substrate was sintered to form a thin film of the perovskite-type compound. The sintering was performed at a temperature of 300°C for 2 minutes. As shown in Table 1 below, thin films of a large number of perovskite-type compounds in which the combination of x and y in the composition formula was changed were produced.

An experiment on heat resistance was conducted for the thin film of the perovskite-type compound produced. First, an X-ray diffraction experiment was performed on the thin film of the perovskite-type compound (before heating at 150°C) to measure the position ($2\theta$) of the X-ray diffraction peak of the perovskite-type compound. The position of the X-ray diffraction peak is defined by the position of the local maximum value of the intensity.

Next, the thin film of the perovskite-type compound was placed on the heater together with the glass substrate, and was heated at 150°C for 500 hours under a nitrogen atmosphere. Then, an X-ray diffraction experiment was performed on the thin film of the perovskite-type compound after heating, and the position of the X-ray diffraction peak of the perovskite-type compound was measured.

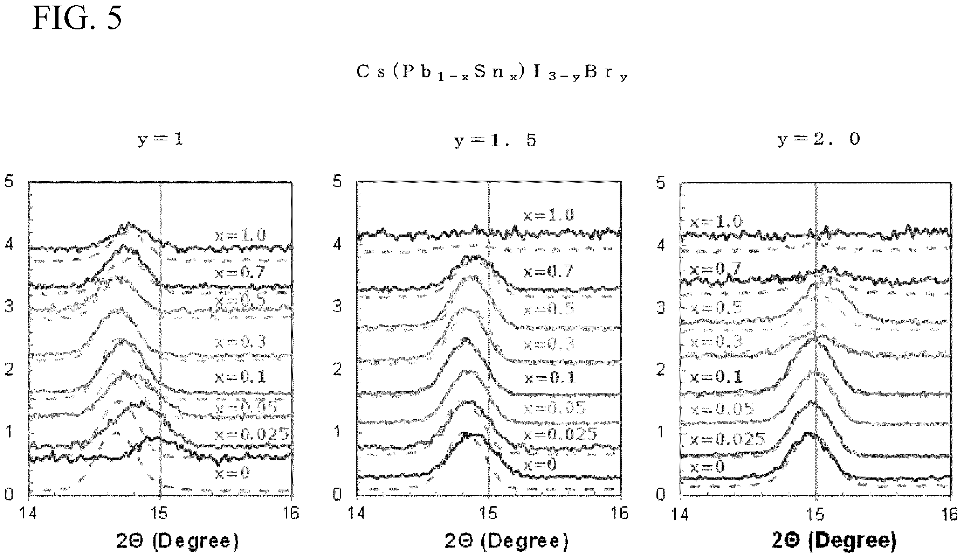

Fig. 5 is a graph showing results of X-ray diffraction experiments for some perovskite-type compounds. In Fig. 5, the result of the X-ray diffraction experiment on the perovskite-type compound before heating is indicated by a broken line. In Fig. 5, the result of the X-ray diffraction experiment on the perovskite-type compound after heating is shown by a solid line. From the graph shown in Fig. 5, it can be seen that in some compounds, an X-ray diffraction peak derived from a perovskite structure in which a diffraction angle $2\theta$ is observed at 13 to 16° from a state before heating is not observed. This is considered to be because the corresponding composition (corresponding to specific values of x and y) is very unstable, and the perovskite structure cannot be maintained at room temperature. In some perovskite-type compounds, the position of the X-ray diffraction peak derived from the perovskite structure in which the diffraction angle $2\theta$ is found to be 13 to 16° varies before and after heating. This is considered to be because the perovskite compound having the corresponding composition was decomposed or phase-separated by heating. In other words, when there is an X-ray diffraction peak derived from the perovskite structure in which the diffraction angle $2\theta$ is found to be 13 to 16° before heating, and when the peak position hardly varies before and after heating, it can be said that the perovskite-type compound has heat resistance of 150°C.

Table 1 below is a plot showing experimental results of heat resistance in some perovskite-type compounds. In the following Table 1, the evaluation of the heat resistance is clearly indicated for each composition of the perovskite-type compound (values of x and y). Here, the evaluation of "good" in heat resistance is defined by the fact that a perovskite structure is confirmed before heating in the X-ray diffraction peak described above, and the deviation ($\Delta 2\theta$) of peak positions before heating and after heating is 0.05° or less. The evaluation of "poor" in heat resistance is defined by the fact that a perovskite structure is not confirmed in the X-ray diffraction peak before heating, or the deviation ($\Delta 2\theta$) of the peak position of the X-ray diffraction peak before and after heating is larger than 0.05°.

(Table 1)

| x | y | Heat resistance |
|---|---|---|
| 0.000 | 0.000 | Poor |
| 0.025 | 0.000 | Poor |
| 0.050 | 0.000 | Poor |
| 0.100 | 0.000 | Poor |
| 0.300 | 0.000 | Poor |
| 0.500 | 0.000 | Poor |
| 0.700 | 0.000 | Poor |
| 1.000 | 0.000 | Poor |

| x | y | Heat resistance |
|---|---|---|
| 0.100 | 0.250 | Poor |
| 0.300 | 0.250 | Poor |
| 0.500 | 0.250 | Poor |
| 0.700 | 0.250 | Poor |
| 0.850 | 0.250 | Poor |

| x | y | Heat resistance |
|---|---|---|
| 0.100 | 0.500 | Poor |
| 0.300 | 0.500 | Poor |
| 0.500 | 0.500 | Poor |
| 0.700 | 0.500 | Poor |
| 0.850 | 0.500 | Poor |

| x | y | Heat resistance |
|---|---|---|
| 0.100 | 0.750 | Poor |
| 0.300 | 0.750 | Poor |
| 0.500 | 0.750 | Poor |
| 0.700 | 0.750 | Poor |
| 0.850 | 0.750 | Poor |

| x | y | Heat resistance |
|---|---|---|
| 0.000 | 1.000 | Poor |
| 0.025 | 1.000 | Poor |
| 0.050 | 1.000 | Poor |
| 0.100 | 1.000 | Good |
| 0.300 | 1.000 | Good |
| 0.500 | 1.000 | Good |
| 0.700 | 1.000 | Good |
| 0.850 | 1.000 | Poor |
| 1.000 | 1.000 | Poor |

| x | y | Heat resistance |
|---|---|---|
| 0.000 | 1.500 | Poor |
| 0.025 | 1.500 | Good |
| 0.050 | 1.500 | Good |
| 0.100 | 1.500 | Good |
| 0.300 | 1.500 | Good |
| 0.500 | 1.500 | Good |
| 0.700 | 1.500 | Good |
| 0.850 | 1.500 | Poor |
| 1.000 | 1.500 | Poor |

| x | y | Heat resistance |
|---|---|---|
| 0.000 | 2.000 | Good |
| 0.025 | 2.000 | Good |
| 0.050 | 2.000 | Good |
| 0.100 | 2.000 | Good |
| 0.300 | 2.000 | Good |
| 0.500 | 2.000 | Good |
| 0.700 | 2.000 | Poor |
| 1.000 | 2.000 | Poor |

| x | y | Heat resistance |
|---|---|---|
| 0.300 | 2.500 | Good |
| 0.500 | 2.500 | Good |
| 0.700 | 2.500 | Poor |

| x | y | Heat resistance |
|---|---|---|
| 0.000 | 3.000 | Good |
| 0.025 | 3.000 | Good |
| 0.050 | 3.000 | Good |
| 0.100 | 3.000 | Good |
| 0.300 | 3.000 | Good |
| 0.500 | 3.000 | Poor |
| 0.700 | 3.000 | Poor |
| 1.000 | 3.000 | Poor |

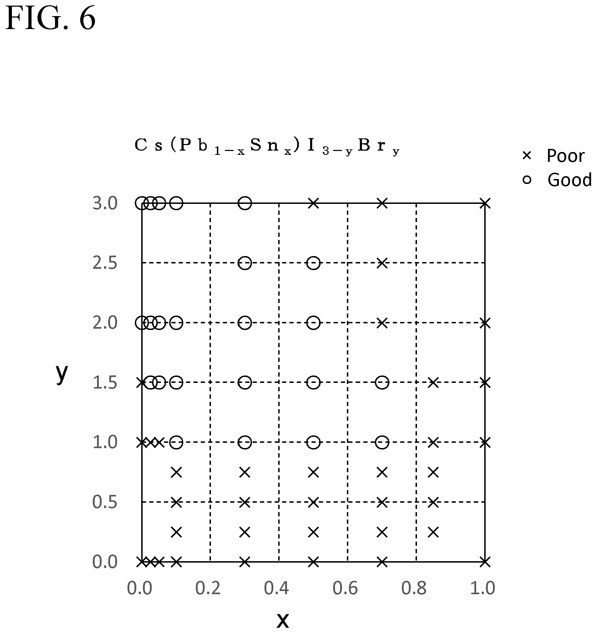

Fig. 6 is a plot showing experimental results of heat resistance in some perovskite-type compounds. Fig. 6 is a diagram showing the experimental results shown in Table 1. In Fig. 6, the horizontal axis represents the value of x in the composition formula, and the vertical axis represents the value of y in the composition formula. In Fig. 6, the evaluation "good" in the heat resistance is indicated by "○", and the evaluation "poor" in the heat resistance is indicated by "×".

Referring to Fig. 6, the region having high heat resistance extends from a region where x is approximately middle and y is middle to a region where x is small and y is large. Specifically, in a section where x is small, y is preferably a desired value or more and 3 or less. In a section where x is middle, the value of y is also preferably middle. As x is larger than a middle value, the range of values that y can take is narrower.

More specifically, in $Cs(Pb_{1-x}Sn_x)I_{3-y}Br_y$, it is presumed from Fig. 6 that a perovskite-type compound having high heat resistance is obtained, when x and y in the composition formula belong to any of the following ranges (1) to (6).

```
(1) 0.0 ≤ x < 0.0125 and 1.6 ≤ y ≤ 3.0

(2) 0.0125 ≤ x < 0.1 and 1.1 ≤ y ≤ 3.0


(3) 0.1 ≤ x < 0.3 and 0.8 ≤ y ≤ 3.0

(4) 0.3 ≤ x < 0.5 and 0.8 ≤ y ≤ 3.0

(5) 0.5 ≤ x < 0.7 and 0.8 ≤ y ≤ 2.8

(6) 0.7 ≤ x ≤ 0.8 and 0.8 ≤ y ≤ 1.8
```

It can be understood from Fig. 6 that a perovskite-type compound having higher heat resistance can be obtained more reliably, when x and y preferably belong to any of the following ranges (1) to (5).

```
(1) 0.0 ≤ x < 0.0125 and 2.0 ≤ y ≤ 3.0

(2) 0.0125 ≤ x < 0.1 and 1.5 ≤ y ≤ 3.0

(3) 0.1 ≤ x < 0.3 and 1.0 ≤ y ≤ 3.0

(4) 0.3 ≤ x < 0.5 and 1.0 ≤ y ≤ 2.5

(5) 0.5 ≤ x ≤ 0.7 and 1.0 ≤ y ≤ 1.5
```

The range represented by x and y can be a perovskite-type compound having heat resistance at a high temperature of 150°C. Such a perovskite-type compound having resistance to high temperature can be suitably used even when used in an environment that can be exposed to high temperature, for example, for a space such as a satellite.

In the above embodiment, the configuration example of the perovskite-type solar cell has been described as an example of the photoelectric conversion element. However, the photoelectric conversion element of the present invention may be applied to, for example, a photodiode, an optical sensor, or the like.

In the above embodiment, the configuration of a single-junction cell as one solar cell and the configuration of a multi-junction solar cell in which two layers of solar cells are laminated were described. However, the configuration of the photoelectric conversion element of the present invention can be similarly applied to a multi-junction solar cell in which three or more layers of solar cells are laminated. In this case, the configuration of the photoelectric conversion element of the present invention is not limited to the top cell, and can be applied to any cell.

Each feature described in each of the foregoing embodiments may be applied to or replaced with another embodiment as much as possible. In the above embodiment, the thin-film photoelectric conversion element has been described as an example, but the present invention is not limited thereto, and can be applied to a crystalline photoelectric conversion element as much as possible.

This application claims priority based on Japanese Patent Application No. 2022-092813 filed on June 8, 2022, the entire contents of which are incorporated herein by reference.

**Claims**

1.  A perovskite-type compound comprising a composition represented by $A(Pb_{1-x} Sn_x)I_{3-y}Br_y$,

wherein element A is one kind or two or more kinds of elements selected from the group consisting of Li, Na, K, Rb and Cs,
x and y belong to any of ranges (1) to (6) below:

$$(1) \quad 0.0 \leq x < 0.0125 \text{ and } 1.6 \leq y \leq 3.0$$

$$(2) \quad 0.0125 \leq x < 0.1 \text{ and } 1.1 \leq y \leq 3.0$$

$$(3) \quad 0.1 \leq x < 0.3 \text{ and } 0.8 \leq y \leq 3.0$$

$$(4) \quad 0.3 \leq x < 0.5 \text{ and } 0.8 \leq y \leq 3.0$$

$$(5) \quad 0.5 \leq x < 0.7 \text{ and } 0.8 \leq y \leq 2.8$$

$$(6) \quad 0.7 \leq x \leq 0.8 \text{ and } 0.8 \leq y \leq 1.8.$$

2. The perovskite-type compound according to claim 1,
   wherein x and y belong to any of ranges (1) to (5) below:

$$(1) \quad 0.0 \leq x < 0.0125 \text{ and } 2.0 \leq y \leq 3.0$$

$$(2) \quad 0.0125 \leq x < 0.1 \text{ and } 1.5 \leq y \leq 3.0$$

$$(3) \quad 0.1 \leq x < 0.3 \text{ and } 1.0 \leq y \leq 3.0$$

$$(4) \quad 0.3 \leq x < 0.5 \text{ and } 1.0 \leq y \leq 2.5$$

$$(5) \quad 0.5 \leq x \leq 0.7 \text{ and } 1.0 \leq y \leq 1.5.$$

3. The perovskite-type compound according to claim 1 or 2, wherein a band gap between a valence band and a conduction band is 1.9 eV or less.

4. The perovskite-type compound according to any one of claims 1 to 3, wherein a band gap between a valence band and a conduction band is 1.5 eV or more.

5. The perovskite-type compound according to any one of claims 1 to 4, wherein the element A is Cs.

6. The perovskite-type compound according to claim 5, further satisfying "$y \leq 5.0x + 1.0$".

7. A photoelectric conversion element comprising a light absorbing layer including the perovskite-type compound according to any one of claims 1 to 6.

FIG. 1

FIG. 2

# FIG. 3

$$Cs(Pb_{1-x}Sn_x)I_{3-y}Br_y$$

FIG. 4

FIG. 5

$Cs(Pb_{1-x}Sn_x)I_{3-y}Br_y$

y = 1

x=1.0
x=0.7
x=0.5
x=0.3
x=0.1
x=0.05
x=0.025
x=0

2Θ (Degree)

y = 1.5

x=1.0
x=0.7
x=0.5
x=0.3
x=0.1
x=0.05
x=0.025
x=0

2Θ (Degree)

y = 2.0

x=1.0
x=0.7
x=0.5
x=0.3
x=0.1
x=0.05
x=0.025
x=0

2Θ (Degree)

# FIG. 6

$C s (P b_{1-x} S n_x) I_{3-y} B r_y$

× Poor
○ Good

## INTERNATIONAL SEARCH REPORT

| International application No. |
| --- |
| **PCT/JP2023/020980** |

**A.     CLASSIFICATION OF SUBJECT MATTER**

*C01G 21/00*(2006.01)i; *H10K 30/50*(2023.01)i
FI:   C01G21/00; H10K30/50

According to International Patent Classification (IPC) or to both national classification and IPC

**B.     FIELDS SEARCHED**

Minimum documentation searched (classification system followed by classification symbols)

C01G21/00; H10K30/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C.     DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0031418 A (UNIVERSITY-INDUSTRY COOPERATION GROUP OF KYUNG HEE UNIVERSITY) 11 March 2022 (2022-03-11) <br> paragraphs [0003], [0069]-[0072] | 1-5, 7 |
| X | JP 2021-082726 A (UNIV ELECTRO COMMUNICATIONS) 27 May 2021 (2021-05-27) <br> paragraphs [0013]-[0046], [0072]-[0080] | 1-7 |
| X | WO 2021/021911 A1 (THE BOARD OF REGENTS OF THE UNIVERSITY OF OKLAHOMA) 04 February 2021 (2021-02-04) <br> claims | 1-5, 7 |
| X | LIU, Shengnan et al. Water-stable all-inorganic CsPb1-XSnXBr2I perovskite quantum dots encapsulated in paraffin for white light-emitting diodes. Journal of Alloys and Compounds. 2019, 806, 1022-1028 <br> in particular, columns "1. Introduction", "3. Results and discussion" | 1-7 |
| A | CN 111253942 A (CHANGCHUN UNIVERSITY OF TECHNOLOGY) 09 June 2020 (2020-06-09) <br> entire text | 1-7 |

☑ Further documents are listed in the continuation of Box C.        ☑ See patent family annex.

| | |
| --- | --- |
| *      Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

# EP 4 538 232 A1

| INTERNATIONAL SEARCH REPORT | International application No. |
| | PCT/JP2023/020980 |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0024815 A (CHUNG ANG UNIVERSITY INDUSTRY ACADEMIC COOPERATION FOUNDATION) 08 March 2021 (2021-03-08)<br>    entire text | 1-7 |
| A | ZHU, Sinan et al. Structural, Electronic, Stability, and Optical Properties of CsPb1-xSnxIBr2 Perovskites: A First-Principles Investigation. The Journal of Physical Chemistry C. 2019, 123, 20476-20487<br>    entire text | 1-7 |

Form PCT/ISA/210 (second sheet) (January 2015)

20

**INTERNATIONAL SEARCH REPORT**
Information on patent family members

International application No.

**PCT/JP2023/020980**

| Patent document cited in search report | | | Publication date (day/month/year) | Patent family member(s) | Publication date (day/month/year) |
|---|---|---|---|---|---|
| KR | 10-2022-0031418 | A | 11 March 2022 | (Family: none) | |
| JP | 2021-082726 | A | 27 May 2021 | (Family: none) | |
| WO | 2021/021911 | A1 | 04 February 2021 | US 2022/0277902 A1 claims | |
| CN | 111253942 | A | 09 June 2020 | (Family: none) | |
| KR | 10-2021-0024815 | A | 08 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022092813 A

**Non-patent literature cited in the description**

- **LIANG, J. et al.** *J. Am. Chem. Soc.*, 2017, vol. 139, 14009-14012
- **FANG, Z. et al.** *Nano Energy*, 2019, vol. 61, 389-396
- **WANG, Z. et al.** *Adv. Sci.*, 2019, vol. 6, 1801704